# EUROPÄISCHE PATENTSCHRIFT

(11) **EP 1 146 243 B1**
(45) Veröffentlichungstag und Bekanntmachung des Hinweises auf die Patenterteilung: **30.08.2006**
(21) Anmeldenummer: 01104667.9
(22) Anmeldetag: 24.02.2001
(51) Int. Cl.: F16D 23/04

(54) **Synchronisiereinheit für Schaltkupplungen**
Synchronizer assembly for shift clutch
Ensemble de sychronisation pour embrayage de changement de vitesses

(30) Priorität: 12.04.2000 DE 10018092
(43) Veröffentlichungstag der Anmeldung: 17.10.2001
(73) Patentinhaber: Schaeffler KG, 91074 Herzogenaurach (DE)
(72) Erfinder: Buer, Gerald, 96172 Mühlhausen (DE); Röckelein, Ernst, 96138 Burgebach (DE); Schwuger, Josef, 91315 Höchstadt (DE)

(56) Entgegenhaltungen:
- DE-A- 19 821 565
- DE-A- 19 832 729
- DE-A- 19 917 230
- US-A- 5 657 844

## Beschreibung

### Gebiet der Erfindung

Die Erfindung betrifft eine Synchronisiereinheit für Schaltkupplungen von Kraftfahrzeuggetrieben mit einem Synchronkörper, wenigstens einem ersten in den Synchronkörper eingreifenden Synchronring und einem zweiten Synchronring, wobei der Synchronkörper mindestens aus einem ersten Abschnitt und einem zweiten Abschnitt besteht, die Abschnitte durch Umformen aus Blech gefertigt sowie stirnseitig aneinander befestigt sind, der Synchronkörper zumindest in eine Richtung stirnseitig mit Ausnehmungen versehen ist und wobei der erste Synchronring mit Mitnehmernocken in die Ausnehmungen eingreift.

### Hintergrund der Erfindung

Es ist in Wechselgetrieben von Fahrzeugen üblich, die Schaltkupplungen, die eine Getriebewelle mit einem oder zwei auf der Getriebewelle sitzenden Gangrädern verbinden, mit Synchronisiereinheiten zu versehen. Die Synchronisiereinheiten gleichen mittels Reibungsenergie die während eines Gangwechsels auftretenden unterschiedlichen Relativgeschwindigkeiten zwischen Gangrad und Getriebewelle aneinander an.

Synchronisiereinheiten gibt es in den verschiedensten Ausführungsformen. Sie arbeiten jedoch alle weitestgehend nach dem gleichen Grundprinzip. An einem oder zwischen zwei Zahnrädern sitzt eine Schaltkupplung. Die Schaltkupplung ist durch eine Führungsmuffe, eine Schaltmuffe und einen Kupplungskörper gebildet. Die Führungsmuffe, häufig auch als Synchronkörper bzw. Synchronkörperträger bezeichnet, ist drehfest mit der Welle verbunden. Sie nimmt an ihrem Außenumfang längsverschiebbar die Schaltmuffe auf. Die Schaltmuffe wird oft auch als Schiebemuffe bezeichnet. An Gangrädern sitzt der Kupplungskörper. Beim Einlegen eines Ganges wird die Schiebemuffe auf dem Synchronkörper axial verschoben, greift formschlüssig in den Kupplungskörper und verbindet somit die Getriebewelle mit dem Gangrad verdrehfest. Während dieses Prozesses werden die Relativgeschwindigkeiten des Gangrades und der Getriebewelle aneinander mittels eines Synchronringes und Gegenreibflächen oder mehreren Synchronringen angeglichen. Der Synchronring oder einer der Synchronringe ist in Drehrichtung formschlüssig mit dem Synchronkörper verbunden. Bei Anordnungen mit mehreren Synchronringen greift also einer der Synchronringe in den Synchronkörper ein. In der Regel ist dann ein weiterer Synchronring dem Kupplungskörper zugeordnet. Beide Synchronringe weisen Kegelflächen auf. Beim Einlegen des Ganges treffen die Kegelflächen der Synchronringe aufeinander. Es entsteht Reibschluß, durch den das Gangrad auf die annähernd gleiche Drehzahl wie die der Getriebewelle gebracht wird.

Nach dem Stand der Technik sind auch Synchronisiereinheiten bekannt, bei denen der zweite Synchronring nicht an dem Kupplungskörper angeordnet ist, sondern als separates Teil drehschlüssig in das Gangrad bzw. den Kupplungskörper eingreift oder reibschlüssig mit dem Synchronkörper verbunden ist. Zwei oder drei Reibverbindungen sorgen für höhere Reibleistung. Der Synchronisiervorgang ist damit schneller abgeschlossen. Für zwei oder drei Reibpaarungen werden in der Regel mindestens drei Synchronringe eingesetzt. In "Anwendungsbeispiele - Produkte für die Schaltung in Kfz-Getrieben" einer Produktübersicht der INA Wälzlager Schaeffler oHG, Ausgabe vom August 1998, Seite 21, sind zwei Beispiele von sogenannten Mehrfachsynchronisiereinheiten dargestellt.

Die beschriebenen Synchronisiereinheiten nach dem Stand der Technik weisen eine relativ hohe Teileanzahl auf. Diese Teile werden bei der Montage des Getriebes als Einzelteile auf die Getriebewelle und in die Synchronisiereinheit montiert. Der Zeitaufwand für die Montage einer derartigen Synchronisiereinheit ist relativ hoch und hat damit einen negativen Einfluss auf die Gesamtkosten eines Getriebes.

Verzahnte Teile von Synchronisiereinheiten, wie der Synchronkörper sind aufgrund ihrer recht komplizierten Struktur auf dem üblichen spanabhebenden Wege nur sehr zeit- und kostenintensiv herzustellen. Deshalb wurden in der jüngsten Vergangenheit Synchronisiereinheiten der neuen Generation mit zum Beispiel Synchronkörpern geschaffen, die in Umformprozessen ohne wesentliche Zerspanarbeit gefertigt sind. Für die spanlose Fertigung von Synchronkörpern wird als Ausgangsmaterial Blech verwendet, das durch Trennen und Umformen in seine bestimmungsgemäße Form gebracht ist. Die Hauptvorteile derartig gefertigter Synchronkörper liegen in den relativ geringen Kosten für ihre Herstellung in der Massenproduktion sowie in ihrem geringen Gewicht. Der Großteil der zur Fertigung eingesetzten Ausgangsmateriales wird auch tatsächlich zur Bildung der Form des Synchronkörpers verwendet und geht somit nicht, wie bei der spanabhebenden Fertigung von Synchronkörpern, als Abfallmaterial verloren.

Einen durch Umformen gefertigten Synchronkörper nach dem Stand der Technik beschreibt DE 198 21 565 A1. Dieser Synchronkörper ist aus zwei an ihren Stirnseiten miteinander verbundenen (halb)schalenförmigen Abschnitten gebildet. Diese Abschnitte sind Wand an Wand aneinander befestigt. Jeder dieser Abschnitte ist aus Blech geformt und bildet jeweils die Hälfte des Synchronkörpers. Der Synchronkörper weist an seinem Außenumfang eine Außenverzahnung auf. Auf dieser Außenverzahnung sitzt längsverschiebbar eine Schiebemuffe. Der Innenumfang des Synchronkörpers ist mit einer Innenverzahnung für den drehfesten Sitz auf der Getriebewelle versehen.

DE 198 21 565 A1 beschreibt auch einen Synchronkörper, bei dem die Außenverzahnung separat auf einen die Nabe mit der Außenverzahnung verbindenden Steg aufgesetzt ist. Die Außenverzahnung ist aus bogenförmig geformten Segmenten gebildet.

Die Außenverzahnung und damit der Verschiebesitz für die Schiebemuffe ist durch Aussparungen bzw. Längsnuten unterbrochen. Diese Längsnuten dienen als Aufnahme für Arretierelemente bzw. Druckstücke und/oder als Mitnehmer für den Eingriff eines Synchronringes in den Synchronkörper. Die beschriebenen Synchronkörper sind für Synchronisiereinheiten, die relativ geringen Belastungen ausgesetzt sind, gut einsetzbar. Bei höheren Belastungen verformen sich derartige Synchronkörper jedoch häufig unzulässig. Ein Grund für die Verformungen liegt in dem relativ geringen Gesamtquerschnitt des die Getriebewelle mit dem Verschiebesitz (der Verzahnung) verbindenden Steges, der nur durch die dünnen Wandungen der Abschnitte bzw. eines gestanzten Bleches gebildet ist. Ein weiterer Grund ist durch die Aussparungen und Längsnuten gegeben, die das in sich geschlossene Gebilde zweier Rücken an Rükken befestigter Halbschalen oder eines doppel T-förmig ausgebildeten Profiles mit an sich hohem Widerstandsmoment gegen Torsion extrem schwächen.

Üblicherweise besitzen Synchronkörper nach dem Stand der Technik Anschläge im Bereich des Steges. Diese Anschläge bestimmen und begrenzen den axialen Bewegungsraum von z. B. der Synchronisiereinrichtung benachbart angeordneten Gangrädern oder zur Synchronisiereinrichtung gehörenden Synchronringen bzw. Synchronzwischenringen. Die durch die Wandstärke des Bleches bestimmte Stegbreite des oben beschriebenen Synchronkörpers reicht in der Regel nicht aus, um den notwendigen axialen Abstand der Anschläge in Längsrichtung abzusichern.

### Zusammenfassung der Erfindung

Aufgabe der Erfindung ist es daher, eine Synchronisiereinheit mit einem Synchronkörper der neuen Generation zu schaffen, bei der die vorher genannten Nachteile vermieden werden. Anzustreben ist insbesondere, dass ein aus zwei Abschnitten gebildeter Synchronkörper der vorab beschriebenen Gattung geschaffen wird, der für nahezu alle Anwendungsfälle verwendbar ist, und dass eine Synchronisiereinheit entsteht, die sich durch ein geringes Gewicht, leichte und kostengünstige Herstellbarkeit und eine kostengünstige Montage auszeichnet.

Diese Aufgabe wird nach dem kennzeichnenden Teil des Anspruches 1 dadurch gelöst, dass die Abschnitte stirnseitig einen ringförmigen Hohlraum einschließen und die Ausnehmungen in einem den Hohlraum begrenzenden ersten Wandabschnitt wenigstens eines der Abschnitte eingebracht sind. Einer oder beide Abschnitte des Synchronkörpers sind also bodenseitig durchgestellt, so dass sich eine axial erstreckende Verformung ergibt. Beim stirnseitigen Befestigen der Abschnitte aneinander bildet diese Verformung einen ringförmigen Hohlraum der von Wandabschnitten der aneinander befestigten Abschnitte begrenzt ist. Ein derartig eingeschlossener Hohlraum gibt dem Steg des Synchronkörpers ein Profil, mit dem der Synchronkörper ein hohes Widerstandsmoment gegen Torsion und Biegung erhält. Der Synchronkörper ist trotz Dünnwandigkeit seiner Abschnitte unter hohen Lasten relativ verwindungssteif.

Die Erfindung lässt sich für Synchronkörper anwenden, die aus zwei schalenförmig ausgebildeten Abschnitten (Halbschalen) zusammengesetzt sind, aber auch für Synchronkörper, deren Steg (als Einzelsegment) ohne Nabe und Verzahnung oder der Steg zusammen mit der Nabe aber ohne Verzahnung aus zwei Abschnitten gebildet ist. Die Außenverzahnung ist bei diesen Versionen separat gefertigt und auf dem Steg befestigt.

Vorzugsweise ist jedoch wie auch eine Ausgestaltung der Erfindung vorsieht, ein Synchronkörper vorgesehen, bei dem der erste Abschnitt und der zweite Abschnitt jeweils einen Teil einer Nabe und eines Steges des Synchronkörpers bilden und eine separat gefertigte Außenverzahnung an dem Steg befestigt ist.

Die stirnseitig angeordneten Ausnehmungen sind in mindestens einem den Hohlraum begrenzenden Wandabschnitt von zumindest einem der Abschnitte eingebracht. Damit ergeben sich zwei Vorteile. Der erste Vorteil ergibt sich daraus, dass die Ausnehmungen von relativ hoch belasteten Zonen wie der Verzahnung des Synchronkörpers in weniger belastete Bereiche verlagert werden. Stirnseitig eingebrachte Ausnehmungen oder Längsnuten in der Außenverzahnung können ggf. dadurch an der Außenverzahnung entfallen. Bei einem Halbschalenprofil des oder der Abschnitte ist der Synchronkörper u. U. umfangsseitig wieder geschlossen ausgeführt. Damit ist dem Synchronkörper zusätzlich Festigkeit und Verdrehsteifigkeit gegeben. Der zweite Vorteil ergibt sich durch den axialen Freiraum, den die Mitnehmernocken des Synchronringes erhalten, wenn sie in die Ausnehmungen eingreifen und in den Hohlraum hineinragen. Die Mitnehmernocken können bezüglich ihrer Länge mit ausreichender Sicherheit ausgelegt werden, da sie mit ihren Enden in einen ansonsten "toten" Raum hineinragen und damit keine weiteren Elemente bzw. die Funktion der Synchronisiereinheit oder Schaltkupplung behindern könnten.

Als Material für die Herstellung der Abschnitte kann selbstverständlich, wie es auch für die Abschnitte nach dem Stand der Technik eingesetzt wird, sämtliches ziehbare oder formbare Blechmaterial eingesetzt werden, das dann anschließend einsatzgehärtet oder in einem Durchhärteverfahren gehärtet wird.

Eine bevorzugte Ausgestaltung der Erfindung sieht vor, dass zumindest einer der Abschnitte mit einem den Hohlraum begrenzenden zweiten Wandabschnitt am Synchronkörper stirnseitig einen Anschlag bildet. Der ansonsten durch die Wandstärke der Blechwandung der Abschnitte bestimmte und in seinem Querschnitt recht schmale Steg ist im Bereich des Hohlraumes verbreitert. Ein den Hohlraum begrenzender Wandabschnitt ist derartig geformt, dass er einen Anschlag für ein benachbartes Gangrad, einen Synchronring oder ein anderes Teil der Schaltkupplung bildet. Axiale Abstände der Anschläge sind über die axiale Ausdehnung des Hohlraumes beliebig gestaltbar.

Eine weitere Ausgestaltung der Erfindung sieht vor, dass der erste Synchronring außenseitig eine Verzahnung aufweist und diese Verzahnung für eine formschlüssige Verbindung mit einer Schiebemuffe vorgesehen ist. Bei diesem Synchronring handelt es sich um den sogenannten äußeren Synchronring, der vorzugsweise mit seiner Verzahnung und mit in axiale Richtung weisenden Mitnehmernocken in einem kombinierten Umform-Stanzprozeß mit nachfolgender spanabhebender Bearbeitung der Reibkonen gefertigt ist. Diese bevorzugte Ausgestaltung der Erfindung schließt aber nicht aus, dass bei Einfach- und Doppel-Konus-Synchronisiereinheiten der mittlere bzw. der innere Ring den ersten Synchronring bilden und mit den Mitnehmernocken versehen sind sowie in die Ausnehmungen eingreifen.

In weiterer Ausgestaltung ist vorgesehen, dass der erste Synchronring mittels der axial in den Hohlraum eindringenden Enden der Mitnehmernocken unverlierbar an dem Synchronkörper gesichert ist. Mit einer derartigen Anordnung ist eine Montageeinheit geschaffen, die außerhalb des eigentlichen Getriebe und unabhängig von der Montage auf der Getriebewelle vormontiert werden kann. Auf diese Weise wird Montagezeit bei der Montage des Getriebes eingespart. Die Enden sind mit radial nach innen gerichteten Vorsprüngen versehen und hintergreifen mit den Vorsprüngen den ersten Wandabschnitt des Hohlraumes von innen. Auf diese Weise ist der erste Synchronring an dem Synchronkörper verliergesichert. Außer diesen den Wandabschnitt hintergreifenden Vorsprüngen ist auch die Verwendung von Schnappnasen oder das Einpressen der Mitnehmernocken als Verliersicherung denkbar.

Schließlich bezieht sich eine Ausgestaltung der Erfindung auf eine häufig angewendete Variante einer Synchronisiereinheit, die mindestens einen ersten und einen zweiten Synchronring aufweist und bei der der erste Synchronring unverlierbar an dem Synchronkörper gesichert ist. Die Montageeinheit kann um ein weiteres Element erweitert werden, wenn der zweite Synchronring an dem ersten Synchronring unverlierbar angeordnet ist. Eine derartige Anordnung lässt sich insbesondere dann realisieren, wenn an einer Doppel-Konus-Synchronsiereinheit der innere Synchronring der erste Synchronring ist und mit Mitnehmernocken an den Synchronkörper verliergesichert ist. Durch die ineinander gesteckte Anordnung der Synchronringe sind dann der zweite und sogar ein dritter Synchronring über den ersten Synchronring am Synchronkörper gesichert.

### Kurze Beschreibung der Zeichnungen

Die Erfindung wird nachfolgend anhand von mehreren Ausführungsbeispielen erläutert. Es zeigen:
- Figur 1: eine Synchronisiereinheit, bei der der erste Synchronring außenseitig eine Verzahnung aufweist in der Hauptansicht,
- Figur 2: eine Synchronisiereinheit nach Figur 1 in einem Schnitt entlang der Linie II-II,
- Figur 3: eine synchronkörperseitige Ansicht der Synchronringe der Synchronisiereinheit nach Figur 1,
- Figur 4: ein weiteres Ausführungsbeispiel einer erfindungsgemäßen Synchronisiereinheit, bei der der erste Synchronring durch den inneren Synchronring gebildet ist im Schnitt und
- Figur 5: eine synchronkörperseitige Ansicht der Synchronringe der Synchronisiereinheit nach Figur 4.

### Detaillierte Beschreibung der Zeichnungen

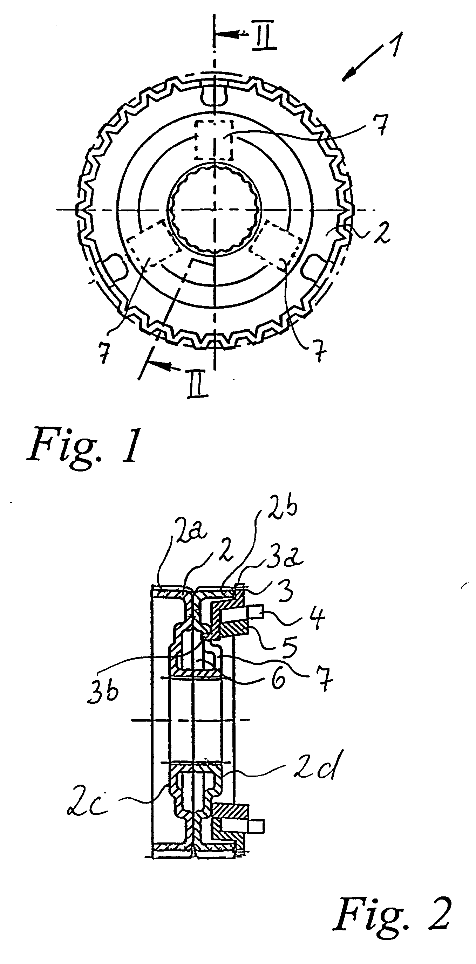

In Figur 1 und Figur 2 ist mit 1 ein Ausführungsbeispiel einer erfindungsgemäßen Synchronisiereinheit dargestellt. Die Synchronisiereinheit 1 besteht aus einem Synchronkörper 2, einem ersten Synchronring 3, einem zweiten Synchronring 4 sowie einem dritten Synchronring 5. Der Synchronkörper 2 ist aus einem ersten Abschnitt 2a und einem zweiten Abschnitt 2b zusammengesetzt. Die Abschnitte 2a, 2b sind jeweils halbschalenförmig ausgebildet, durch Umformen aus Blech gefertigt sowie stirnseitig aneinander befestigt. Dabei schlie-ßen sie einen Hohlraum 6 zwischen sich ein. Die Synchronringe 3, 4, 5 sind ineinander angeordnet und bilden damit ein Synchronringpaket. Der erste Synchronring 3 weist außenseitig eine Verzahnung 3a auf, die für einen formschlüssigen Eingriff in eine nicht dargestellte Schiebemuffe vorgesehen ist. Im Bereich des Innendurchmessers des ersten Synchronringes 3 stehen axial Mitnehmernocken 3b hervor. Der erste Synchronring 3 greift mit den Mitnehmernocken 3b in Ausnehmungen 7 ein. Die Ausnehmungen 7 sind in einen Wandabschnitt des zweiten Abschnittes 2b an der nach außen gewandten Stirnseite des Synchronkörpers 2 eingebracht. Der erste Abschnitt 2a bildet an seiner Stirnseite einen Anschlag 2c und der zweite Abschnitt 2b bildet an seiner Stirnseite einen Anschlag 2d für nicht weiter dargestellte Gangräder.

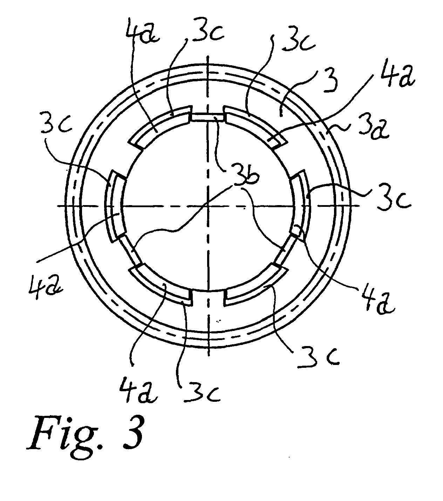

In Figur 3 ist das Synchronringpaket der Synchronisiereinheit 1 synchronkörperseitig ohne Synchronkörper dargestellt. Es zeigt den ersten Synchronring 3 mit der Verzahnung 3a und den Mitnehmernocken 3b in der Draufsicht. Der erste Synchronring 3 ist an seinem Innenumfang mit radialen Aussparungen 3c versehen. In die radialen Aussparungen 3c greifen axial hervorstehende Mitnehmernocken 4a des zweiten Synchronringes 4 ein. Der zweite Synchronring 4 ist mit den Mitnehmernocken 4a an dem ersten Synchronring 3 verliergesichert. Der erste Synchronring 3 wiederum ist mit seinen Mitnehmernocken 3b verliersicher am zweiten Abschnitt 2b des Synchronkörpers 2 aufgenommen, wie in Figur 2 dargestellt ist.

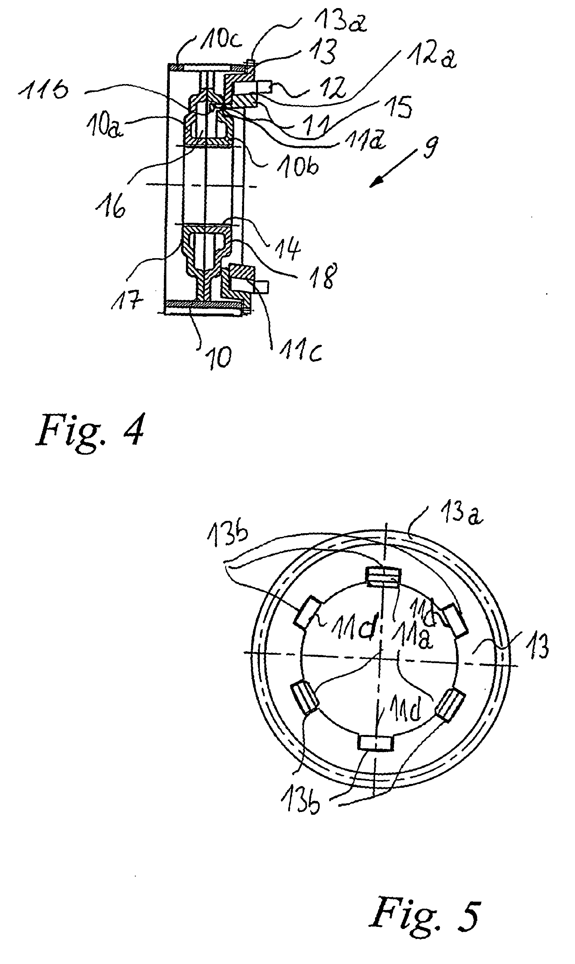

In Figur 4 ist eine Synchronisiereinheit 9 als weiteres Ausführungsbeispiel einer erfindungsgemäßen Synchronisiereinheit dargestellt. Die Synchronisiereinheit 9 besteht aus einem Synchronkörper 10, einem ersten Synchronring 11, einem zweiten Synchronring 12 und einem dritten Synchronring 13. Der Synchronkörper 10 ist aus einem ersten Abschnitt 10a, einem zweiten Abschnitt 10b sowie einer Außenverzahnung 10c gebildet. Der erste Abschnitt 10a sowie der zweite Abschnitt 10b bilden bei diesem Ausführungsbeispiel nur den Steg sowie die Kerbverzahnung 14 des Synchronkörpers 10. Auf den Steg ist die ringförmig ausgebildete Außenverzahnung 10c aufgesetzt. Die Synchronringe 11, 12, 13 bilden wieder ein Synchronringpaket, bei dem der erste Synchronring 11 der innere Synchronring ist. Der erste Synchronring 11 greift mit Mitnehmernocken 11a axial in Ausnehmungen 15 in dem zweiten Abschnitt 10b ein. Dabei dringt der erste Synchronring 11 mit den Enden seiner Mitnehmernocken 11 a in einen Hohlraum 16 ein. Der erste Abschnitt 10a und der zweite Abschnitt 10b schließen diesen Hohlraum 16 zwischen sich ein und begrenzen diesen mit ihren Wandabschnitten. In einen dieser Wandabschnitte sind die Ausnehmungen 15 eingebracht. Der erste Abschnitt 10a bildet an seiner Stirnseite einen Anschlag 17 und der zweite Abschnitt 10b bildet an seiner Stirnseite einen Anschlag 18 für nicht weiter dargestellte Gangräder. Der dritte Synchronring 13 weist außenseitig eine Außenverzahnung 13a auf, die formschlüssig in eine nicht dargestellte Schiebemuffe eingreift. Der erste Synchronring 11 ist mit den in den Hohlraum 16 eindringenden Enden seiner Mitnehmernocken 11a unverlierbar an dem Synchronkörper 10 gesichert. Dazu weisen die Enden radial nach innen gerichtete Vorsprünge 11b auf. Mit den Vorsprüngen 11b hintergreifen Vorsprünge 11b den Wandabschnitt teilweise, der den Hohlraum 16 begrenzt und in den die Ausnehmungen 15 eingebracht sind. Der zweite Synchronring 12 sitzt mit einem Reibkonus 12a auf dem Gegenkonus 11c des ersten Synchronringes 11 und ist damit unverlierbar gesichert.

Figur 5 zeigt das Synchronringpaket der Synchronisiereinheit 9 aus Figur 1 synchronkörperseitig ohne Synchronkörper. Der dritte Synchronring 13 weist außer der Verzahnung 13a an seinem Innenumfang radial nach außen gerichtete Aussparungen 13b auf. In die Aussparungen 13b greifen außer den Mitnehmernocken 11a auch noch Mitnehmernocken 11d des ersten Synchronringes 11 ein und sichern die Abstützung des dritten Synchronringes 13 an dem Synchronkörper 10 bei hohen Drehmomenten ab.

### Bezugszeichen

- 1: Synchronisiereinheit
- 2: Synchronkörper
- 2a: erster Abschnitt
- 2b: zweiter Abschnitt
- 2c: Anschlag
- 2d: Anschlag
- 3: erster Synchronring
- 3a: Verzahnung
- 3b: Mitnehmernocken
- 3c: Aussparung
- 4: zweiter Synchronring
- 4a: Mitnehmernocken
- 5: dritter Synchronring
- 6: Hohlraum
- 7: Ausnehmung
- 8: Kerbverzahnung
- 9: Synchronisiereinheit
- 10: Synchronkörper
- 10a: erster Abschnitt
- 10b: zweiter Abschnitt
- 10c: Außenverzahnung
- 11: erster Synchronring
- 11a: Mitnehmernocken
- 11b: Vorsprünge
- 11c: Gelenkkonus
- 11d: Mitnehmernocken
- 12: zweiter Synchronring
- 12a: Reibkonus
- 13: dritter Synchronring
- 13a: Außenverzahnung
- 13b: Aussparungen
- 14: Kerbverzahnung
- 15: Ausnehmungen
- 16: Hohlraum
- 17: Anschlag
- 18: Anschlag

## Patentansprüche

1. Synchronisiereinheit (1, 9) für Schaltkupplungen von Kraftfahrzeuggetrieben mit einem Synchronkörper (2, 10) und wenigstens einem in den Synchronkörper (2, 10) eingreifenden Synchronring (3, 11), wobei der Synchronkörper (2, 10) mindestens aus einem ersten Abschnitt (2a, 2b) und einem zweiten Abschnitt (2b, 10b) besteht, die Abschnitte (2a, 2b, 10a, 10b) durch Umformen aus Blech gefertigt sowie stirnseitig aneinander befestigt sind und der Synchronkörper (2, 10) zumindest in eine Richtung stirnseitig mit Ausnehmungen (7, 15) versehen ist und wobei der Synchronring (3, 11) mit Mitnehmernocken (3a, 11a) in die Ausnehmungen (7, 15) eingreift, **dadurch gekennzeichnet, dass** die Abschnitte (2a, 2b, 10a, 10b) stirnseitig einen ringförmig ausgebildeten Hohlraum (6, 16) einschließen und die Ausnehmungen (7, 15) in mindestens einen den Hohlraum (6, 16) begrenzenden ersten Wandabschnitt wenigstens eines der Abschnitte (2a, 2b, 10a, 10b) eingebracht sind.

2. Synchronisiereinheit nach Anspruch 2, **dadurch gekennzeichnet, dass** der erste Abschnitt (10a) und der zweite Abschnitt (10b) jeweils einen Teil einer Nabe sowie eines Steges des Synchronkörpers (10) bilden und, daß eine Außenverzahnung (10c) an dem Steg separat befestigt ist.

3. Synchronisiereinheit nach Anspruch 1, **dadurch gekennzeichnet, dass** zumindest einer der Abschnitte (2a, 2b, 10a, 10b) mit einem den Hohlraum (6, 16) begrenzenden zweiten Wandabschnitt am Synchronkörper (2, 10) stirnseitig einen Anschlag (2c, 2d, 17, 18) bildet.

4. Synchronisiereinheit nach Anspruch 1, **dadurch gekennzeichnet, dass** der Synchronring (3) an seinem äußeren Umfang eine Verzahnung (3a) für eine formschlüssige Verbindung mit einer Schiebemuffe aufweist.

5. Synchronisiereinheit nach Anspruch 1, **dadurch gekennzeichnet, dass** der Synchronring (11) unverlierbar an dem Synchronkörper (10) gesichert ist.

6. Synchronisiereinheit nach Anspruch 1, **dadurch gekennzeichnet, dass** die Synchronisiereinheit (9) mindestens einen ersten in dem Synchronkörper (10) eingreifenden Synchronring (11) und einen zweiten Synchronring (12) aufweist und dass der erste Synchronring (11) unverlierbar an dem Synchronkörper (10) gesichert ist.

7. Synchronisiereinheit nach Anspruch 5 und 6, **dadurch gekennzeichnet, dass** die Mitnehmernocken (11a) mit ihren Enden in den Hohlraum (16) eindringen und die Enden radial nach innen gerichtete Vorsprünge (11b) aufweisen und dass die Vorsprünge (11b) den ersten Wandabschnitt teilweise hintergreifen.

## Claims

1. Synchronising device (1, 9) for gearshift clutches of manual transmissions of automotive vehicles, said synchronising device (1, 9) having a synchroniser body (2, 10) and at least one synchroniser ring (3, 11) that engages into the synchroniser body (2, 10), said synchroniser body (2, 10) comprising at least one first section (2a, 2b) and one second section (2b, 10b), which sections (2a, 2b, 10a, 10b) are formed by shaping out of sheet metal and are fixed frontally on each other, said synchroniser body (2, 10) comprising, at least in one direction, recesses (7, 15) on its front end, and said synchroniser ring (3, 11) engaging by means of entraining lugs (3a, 11 a) into the recesses (7, 15), **characterised in that**, the sections (2a, 2b, 10a, 10b) enclose, between their front ends, a hollow annular space (6, 16), and the recesses (7, 15) are made in at least one first wall section of at least one of the sections (2a, 2b, 10a, 10b) that delimits the hollow space (6, 16).

2. Synchronising device of claim 1, **characterised in that**, each of the first section (10a) and the second section (10b) forms a part of a hub and of a web of the synchroniser body (10), and an outer gearing (10c) is separately fixed on the web.

3. Synchronising device of claim 1, **characterised in that**, at least one of the sections (2a, 2b, 10a, 10b) forms, through a second wall section that delimits the hollow space (6, 16), a frontal stop (2c, 2d, 17, 18) on the synchroniser body (2, 10).

4. Synchronising device of claim 1, **characterised in that** the synchroniser ring (3) comprises on its outer periphery, a gearing (3a) for a positive engagement with a sliding sleeve.

5. Synchronising device of claim 1, **characterised in that** the synchroniser ring (11) is secured inseparably on the synchroniser body (10).

6. Synchronising device of claim 1, **characterised in that** the synchronising device (9) comprises at least one first synchroniser ring (11) that is engaged with the synchroniser body (10) and one second synchroniser ring (12), and the first synchroniser ring (11) is secured inseparably on the synchroniser body (10).

7. Synchronising device of claim 5 and 6, **characterised in that** the entraining lugs (11a) penetrate with their ends into the hollow space (16), and the ends comprise radially inward directed projections (11b), which projections (11b) engage partially behind the first wall section.

## Revendications

1. Dispositif de synchronisation (1, 9) pour embrayages de boîtes de vitesses manuelles de véhicules automobiles, ledit dispositif de synchronisation (1, 9) ayant un corps de synchronisation (2, 10) et au moins un anneau de synchronisation (3, 11) qui s'engage dans le corps de synchronisation (2, 10), ledit corps de synchronisation (2, 10) comprenant au moins une première section (2a, 2b) et une seconde section (2b, 10b), ces sections (2a, 2b, 10a, 10b) étant fabriquées par formage à partir de tôle et fixées frontalement, l'une à l'autre, ledit corps de synchronisation (2, 10) étant muni d'évidements (7, 15) du côté frontal, au moins dans une direction, et ledit anneau de synchronisation (3, 11) s'engageant par des tocs d'entraînement (3a, 11a) dans les évidements (7, 15), **caractérisé en ce que** les sections (2a, 2b, 10a, 10b) enferment entre leurs côtés frontaux, un espace vide (6, 16) de forme annulaire, et les évidements (7, 15) sont formés dans au moins une première section de paroi d'au moins une des sections (2a, 2b, 10a, 10b), laquelle délimite l'espace vide (6, 16).

2. Dispositif de synchronisation selon la revendication 1, **caractérisé en ce que** la première section (10a) et la seconde section (10b) forment, à chaque fois, une partie d'un moyeu et d'une entretoise du corps de synchronisation (2, 10), et **en ce que**, une denture extérieure (10c) est fixée séparément sur l'entretoise.

3. Dispositif de synchronisation selon la revendication 1, **caractérisé en ce que**, au moins une des sections (2a, 2b, 10a, 10b) forme, à l'aide d'une seconde section de paroi qui délimite l'espace vide (6, 16), un arrêt frontal (2c, 2d, 17, 18) sur le corps de synchronisation (2, 10).

4. Dispositif de synchronisation selon la revendication 1, **caractérisé en ce que** l'anneau de synchronisation (3) comprend sur sa périphérie extérieure, une denture (3a) pour engagement positif avec un manchon coulissant.

5. Dispositif de synchronisation selon la revendication 1, **caractérisé en ce que** l'anneau de synchronisation (11) est fixé de manière inséparable sur le corps de synchronisation (10).

6. Dispositif de synchronisation selon la revendication 1, **caractérisé en ce que** le dispositif de synchronisation (9) comprend au moins un premier anneau de synchronisation (11) qui s'engage dans le corps de synchronisation (10) et un second anneau de synchronisation (12), et **en ce que** le premier anneau de synchronisation (11) est fixé de manière inséparable sur le corps de synchronisation (10).

7. Dispositif de synchronisation selon la revendication 5 et 6, **caractérisé en ce que** les tocs d'entraînement (11a) pénètrent par leurs extrémités dans l'espace vide (16), et ces extrémités comprennent des saillies (11b) qui sont dirigées radialement vers l'intérieur, et **en ce que** les saillies (11b) s'engagent partiellement derrière la première section de paroi.
